# FASCICULE DE BREVET EUROPEEN

(11) **EP 1 023 943 B1**
(45) Date de publication et mention de la délivrance du brevet: **16.04.2003**
(21) Numéro de dépôt: 00101339.0
(22) Date de dépôt: 24.01.2000
(51) Int. Cl.: B02C 19/14

(54) **Dispositif à casser les bouteilles en verre**
Zerkleinerungsvorrichtung für Glasflaschen
Glass bottle crushing device

(30) Priorité: 27.01.1999 CH 14499; 09.09.1999 CH 164999
(43) Date de publication de la demande: 02.08.2000
(73) Titulaire: Basset, Willy, 1373 Chavornay (CH)
(72) Inventeur: Basset, Willy, 1373 Chavornay (CH)
(74) Mandataire: Laurent, Jean

(56) Documents cités:
- CH-A- 680 051
- FR-A- 2 002 572
- GB-A- 1 592 547
- US-A- 2 142 915
- US-A- 2 177 926
- US-A- 2 235 712
- US-A- 2 466 151
- US-A- 2 655 320

## Description

La présente invention concerne un dispositif à casser les bouteilles en verre destiné à équiper des bennes ou des containers de réception de déchets de verre afin de diminuer le volume de stockage et gagner de la place dans lesdites bennes ou lesdits containers. Le dispositif comprend un cadre pour la fixation du dispositif au container. Des moyens de guidage sont montés sur le cadre du dispositif pour la réception et le guidage de la bouteille. Un marteau est monté rotatif sur le cadre et poussé en direction du guide par un ressort. Le marteau est maintenu dans une position d'armement du ressort par un organe de blocage qui comprend une butée sur laquelle une bouteille à casser peut prendre appui pour libérer le marteau de sa position armée. Le dispositif comprend également un mécanisme de réarmement du marteau pour le remettre dans une position armée.

Plusieurs réalisations de dispositifs pour casser des bouteilles en verre ont déjà fait l'oeuvre de brevets d'invention, mais la plupart de ces dispositifs comprennent certains défauts ne permettant pas de briser de manière sûre la bouteille en verre à casser. Il a été notamment proposé dans le document CH 680 051 un dispositif pour briser des bouteilles en verre par un marteau avec une pointe venant en contact avec la bouteille à casser. Ledit marteau a son axe de rotation sur le guide de réception de la bouteille à casser et sur la longueur de son bras est articulée une tige dont l'autre extrémité comprend une poignée permettant à une personne d'actionner ledit marteau pour casser la bouteille.

Un inconvénient de cet agencement du dispositif avec le marteau et sa pointe est qu'il ne permet pas de casser entièrement la bouteille, mais plutôt de la percer à l'endroit de l'impact. De plus, la personne utilisant le dispositif doit imposer manuellement une impulsion afin que la bouteille soit cassée.

On peut citer également le brevet GB 1,592,547 qui décrit un dispositif à casser des bouteilles notamment en verre. Ce dispositif comprend notamment un boîtier à placer dans un container de récupération de verre, des moyens de guidage d'une bouteille introduite dans le boîtier du dispositif, une base du boîtier dans le prolongement des moyens de guidage pour poser le fond d'une bouteille à casser, un marteau monté rotatif sur une partie du boîtier et poussé en direction des moyens de guidage par un ressort, et un levier monté rotatif proche de l'ouverture de réception d'une bouteille pour armer le marteau à l'encontre du ressort. Les débris de la bouteille cassée passent par une ouverture au fond du boîtier entre les moyens de guidage et la base du boîtier pour être récupéré dans le container.

Un inconvénient de ce dispositif est qu'il est nécessaire de maintenir d'une main le marteau dans sa position armée tout en introduisant la bouteille à casser sur les moyens de guidage à l'aide de l'autre main, ce qui ne facilite pas la manipulation. De plus, la bouteille doit être posée sur la base du boîtier pour permettre de la casser par le marteau armé. Ainsi, le boîtier prend trop de place de manière à pouvoir le fixer à proximité d'une ouverture de récupération du verre d'un container. Même si un mécanisme à gâchette à la base des moyens de guidage peut être prévu pour maintenir le marteau dans sa position armée, il serait nécessaire que ce mécanisme soit activé à chaque fois que le marteau doit être armé et soit en mesure de facilement et simplement le bloquer dans sa position armée.

Un but de l'invention consiste à réaliser un dispositif à casser des bouteilles en verre destiné à équiper facilement des bennes ou des containers de réception de débris de verre qui pallie les défauts constatés sur les dispositifs de l'art antérieur.

Ce but, ainsi que d'autres sont atteints grâce au dispositif cité ci-devant qui se caractérise en ce que l'organe est agencé de manière à pouvoir pivoter à l'encontre de moyens de rappel pour libérer le marteau de sa position armée lorsque la bouteille à casser prend appui contre la butée, et en ce que l'organe revient automatiquement en position de blocage du marteau grâce à ses moyens de rappel quand le mécanisme de réarmement est activé pour placer le marteau dans sa position armée.

Un avantage de ce dispositif consiste à gagner de la place dans les bennes ou containers de récupération du verre. Ce dispositif permet de tripler la quantité de verre récupéré, entraînant une économie de transport jusqu'au lieu de recyclage (1 transport au lieu de 3) ainsi que la diminution de pollution y relative.

Un autre avantage du dispositif consiste en ce que la bouteille est supportée par des moyens de guidage servant de support pour permettre efficacement de casser la bouteille guidée par le marteau.

Le dispositif est constitué d'un châssis métallique qui se fixe autour du trou du container laissant passer la bouteille à détruire.

Les moyens de guidage maintiennent la bouteille sur son trajet jusqu'à une butée, de forme spéciale, qui réceptionne le fond de la bouteille. Par le poids de la bouteille ou en poussant ladite bouteille contre la butée, cela déclenche le frein libérant ainsi le marteau qui vient casser la bouteille. Les débris de verre tombent ainsi au fond du container.

Un levier articulé sur le châssis, c'est-à-dire le cadre du dispositif, permet de réarmer le marteau pour qu'il se retrouve en position de fonctionnement. Il est maintenu dans cette position par le frein qui a repris sa position grâce à ses moyens de rappel. Le levier revient automatiquement dans sa position initiale contre une butée sur le châssis grâce à un ressort de rappel.

Les buts, avantages et caractéristiques du dispositif, objet de l'invention, apparaîtront mieux dans la description suivante de formes d'exécution données uniquement à titre d'exemple en se référant aux dessins annexés sur lesquels :
- la figure 1 représente une vue de côté d'une première forme d'exécution du dispositif selon l'invention dans une première position en tant que système vertical pour des containers à roulettes de 800 litres,
- la figure 2 représente une vue de côté du dispositif selon l'invention de la figure 1 dans une deuxième position où le marteau est armé,
- la figure 3 montre une cinématique des différentes positions de travail du dispositif de la première forme d'exécution,
- les figures 4a et 4b représentent une vue de côté et une vue de dessus d'une deuxième forme d'exécution du dispositif selon l'invention dans une première position en tant que système incliné à 125° pour des gros containers ou des bennes de camions,
- la figure 5 représente une vue de côté du dispositif selon l'invention des figures 4a et 4b dans une deuxième position où le marteau est armé,
- la figure 6 montre une cinématique des différentes positions de travail du dispositif de la deuxième forme d'exécution,
- la figure 7 représente une vue de côté d'une troisième forme d'exécution du dispositif selon l'invention,
- la figure 8 montre les différentes positions de travail du dispositif de la troisième forme d'exécution,
- la figure 9 représente une vue de côté d'une quatrième forme d'exécution du dispositif selon l'invention, et
- la figure 10 montre les différentes positions de travail du dispositif de la quatrième forme d'exécution.

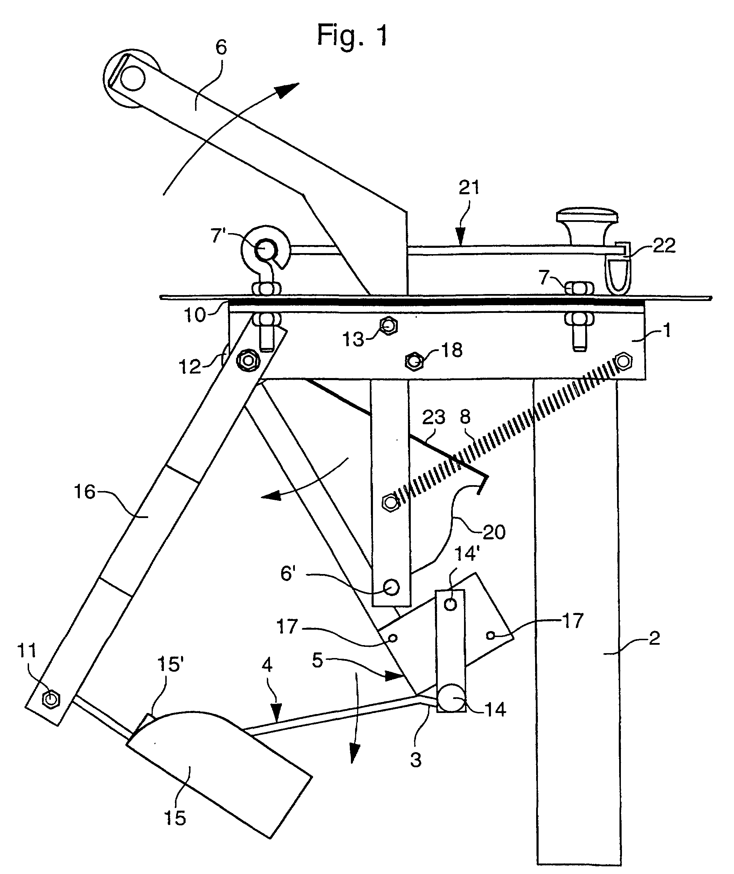

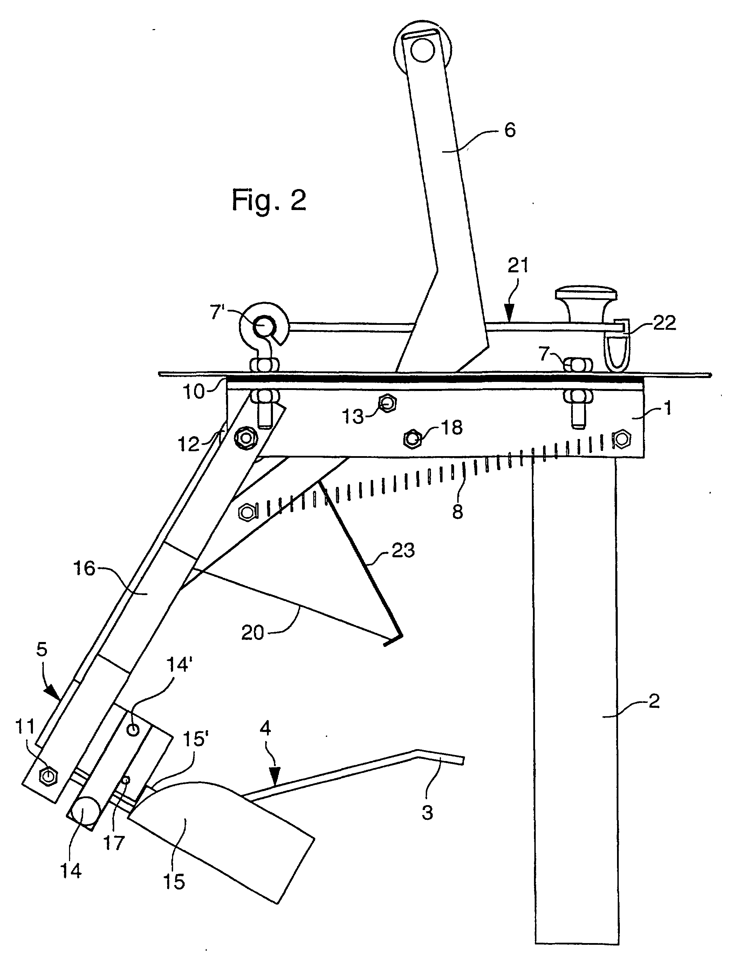

En référence aux figures 1 et 2, le dispositif à casser les bouteilles en verre se compose d'un cadre 1 fixé par des vis 7 autour du trou existant sur le container. Le cadre est habituellement en un matériau métallique, mais d'autres matériaux aussi résistants pourraient être également utilisés. Un joint caoutchouc 10, entre le cadre 1 et le couvercle du container, donne un appui parfait pour une bonne fixation.

Sur le cadre 1 sont fixés des moyens de guidage 2 pour réceptionner une bouteille à casser et la guider. Ce guide 2, qui a par exemple une section transversale en forme de V sur sa longueur, permet à la bouteille de glisser vers le bas. Une lame ressort 23 fixée sur une partie opposée du cadre 1 appuie la bouteille contre le guide 2 le long de son trajet.

Un marteau 5 est monté rotatif autour d'un axe 12' fixé sur une partie du cadre 1. Le marteau 5 est poussé par un ressort puissant 12 sous forme de spirale placé autour de l'axe de rotation 12' en direction du guide 2. La force de ce ressort doit être telle qu'elle permette au marteau de casser la bouteille placée sur le guide. Deux bras 16 sont fixés au cadre au niveau de l'axe de rotation 12' du marteau lequel pivote entre les deux bras 16. La tête du marteau est spécialement étudiée quant à sa forme et son poids. Sur les figures, cette tête n'est représentée que de forme parallélépipédique, mais il pourrait être concevable qu'elle comprenne une pointe, par exemple en diamant, du côté venant en contact avec la bouteille.

A l'autre extrémité des deux bras 16 se trouve l'axe de rotation 11 d'un organe de blocage 4 rotatif du marteau en position d'armement. Un ressort de rappel sous forme de spirale non visible sur les figures 1 et 2 est disposé autour de l'axe 11 afin d'imposer à l'organe de blocage un déplacement en direction de l'ouverture d'introduction d'une bouteille du dispositif. Une butée de cet organe de blocage dans sa position initiale peut être constituée par le marteau- lui-même.

Le mécanisme de réarmement du marteau est constitué dans cette première forme d'exécution par un levier manuel 6 monté rotatif sur le cadre 1 dans une position centrale. En tirant sur un manche extérieur du levier 6, qui pivote autour du point de rotation 13 à l'encontre d'un ressort de rappel 8 destiné à ramener le levier dans une position de repos contre une butée 18 du cadre, une partie intérieure 6' du levier pousse le marteau 5 pour qu'il se réarme et reprenne sa position initiale bloquée par l'organe de blocage 4. Le marteau une fois armé repose sur un support central 15' de l'organe de blocage qui a repris sa position initiale grâce à son ressort de rappel placé autour de l'axe de rotation 11. Dans sa course un pivot 14 monté rotatif en un point 14' sur un côté de la tête du marteau pousse une came décalée 15 de l'organe de blocage 4 qui l'éloigne de sa trajectoire et libère ainsi le passage pour des débris de verre qui seraient restés bloqués entre une butée 3 et le guide 2 lors de la casse d'une précédente bouteille. Le pivot 14 rotatif vient en butée contre deux goupilles 17 du marteau. A la suite de cette manoeuvre, le levier 6 est repositionné à son point de départ contre une butée 18 du cadre par le ressort 8.

A la figure 1, des flèches ont été représentées pour montrer le mouvement du levier 6, du marteau 5 et de l'organe de blocage 4 lors d'une manoeuvre de réarmement du marteau.

Après son introduction par l'ouverture du container, le fond de la bouteille vient s'appuyer sur la butée 3 de l'organe de blocage 4 du marteau 5 constituant un frein du marteau. Par l'appui du fond de la bouteille contre la butée 3, le frein 4 en pivotant par rapport au point de rotation 11 libère ainsi le marteau 5 qui vient casser la bouteille soutenu par le guide 2. La forme de la butée 3 est étudiée de façon à ce que la bouteille prenne bien appui contre le guide 2 aidée également par la lame ressort 23.

Le guide 2, de forme circulaire, carrée ou autre, a été étudié afin de laisser passer des bouteilles de n'importe quelle forme, ayant un diamètre maximum de 110 mm. La bouteille étant cassée, les débris de verre tombent au fond du container.

Une porte 21 placée sur le côté extérieur du cadre et entre deux branches du levier 6 pivote autour d'un axe 7' logé dans deux crochets de deux vis 7. Un joint élastique 22 se trouve sur la porte pour fermer l'ouverture du container. Cette porte dans cette première forme d'exécution sert exclusivement a pousser la bouteille en direction de la butée de l'organe de blocage afin d'empêcher au goulot d'être expulsé hors du container lors de la casse de la bouteille.

Malgré cet avantage constaté de la porte 21, il peut être aussi envisagé de l'enlever en poussant manuellement la bouteille contre la butée de l'organe de blocage pour la casser.

Comme la bouteille est introduite verticalement dans cette première forme d'exécution par une ouverture disposée sur le dessus dudit container en ouvrant la porte 21, il arrive qu'après avoir cassé la bouteille, le goulot de ladite bouteille reste coincé par la lame ressort 23 contre le guide 2. Un câble souple 20 est donc fixé d'une part à la lame ressort 23 et d'autre part sur un point 6' du levier venant en contact du marteau 5. Dès que le levier 6 est à nouveau actionné pour réarmer le marteau, le câble flexible 20 se tend et ainsi entraîne la lame ressort 23 dans son trajet ce qui permet de libérer l'éventuel goulot d'une précédente bouteille cassée bloquée entre la lame et le guide 2. En position de repos du levier 6, la lame ressort 23 revient dans sa position initiale et le câble flexible 20 est détendu afin de ne pas fatiguer inutilement la lame ressort dans cette position.

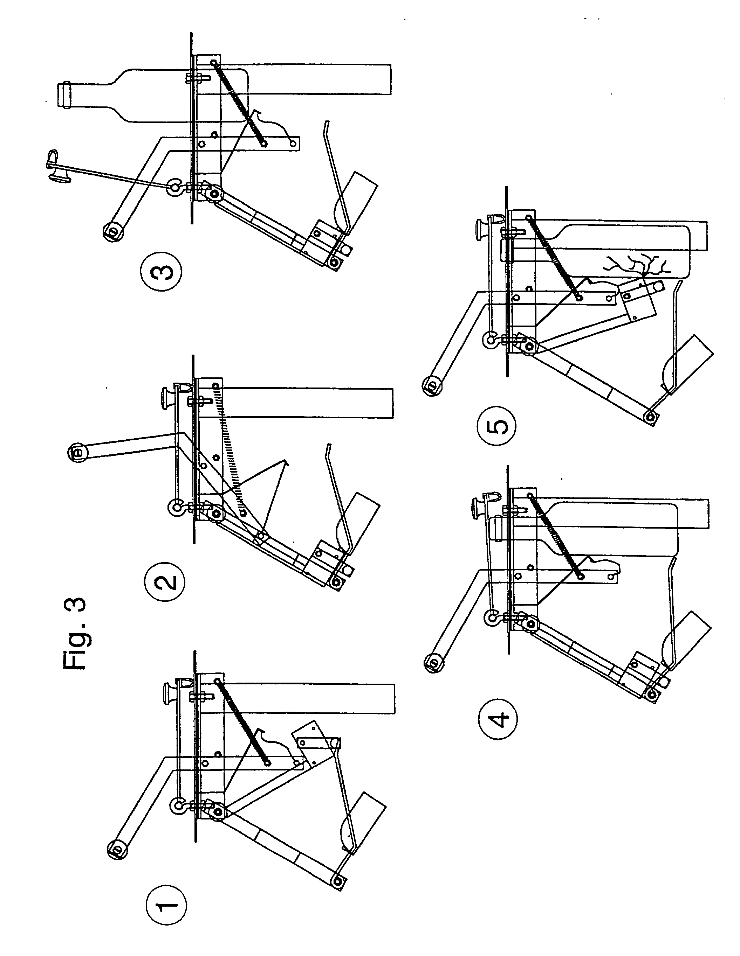

La figure 3 représente une cinématique des différentes étapes qui permettent de casser les bouteilles avec le dispositif de la première forme d'exécution.

Dans la première position, le marteau est désarmé. Dans la deuxième position, le levier est actionné pour pouvoir armer le marteau et le garder dans cette position armée grâce à l'organe de blocage. Dans la troisième position, le levier est relâché et revient automatiquement dans sa position de repos grâce à son ressort de rappel, tandis qu'une bouteille est introduite par l'ouverture du container et glisse le long du guide. Dans la quatrième position, la bouteille arrive contre une butée de la bascule la faisant pivoter autour de son axe de rotation pour libérer le marteau. Dans la cinquième position, le marteau ainsi libéré vient frapper la bouteille afin de la briser.

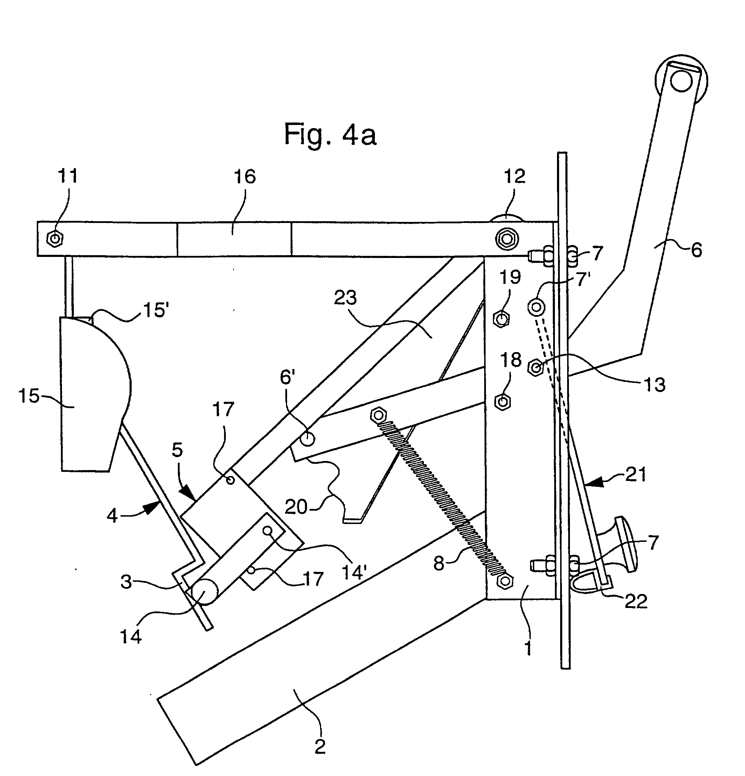

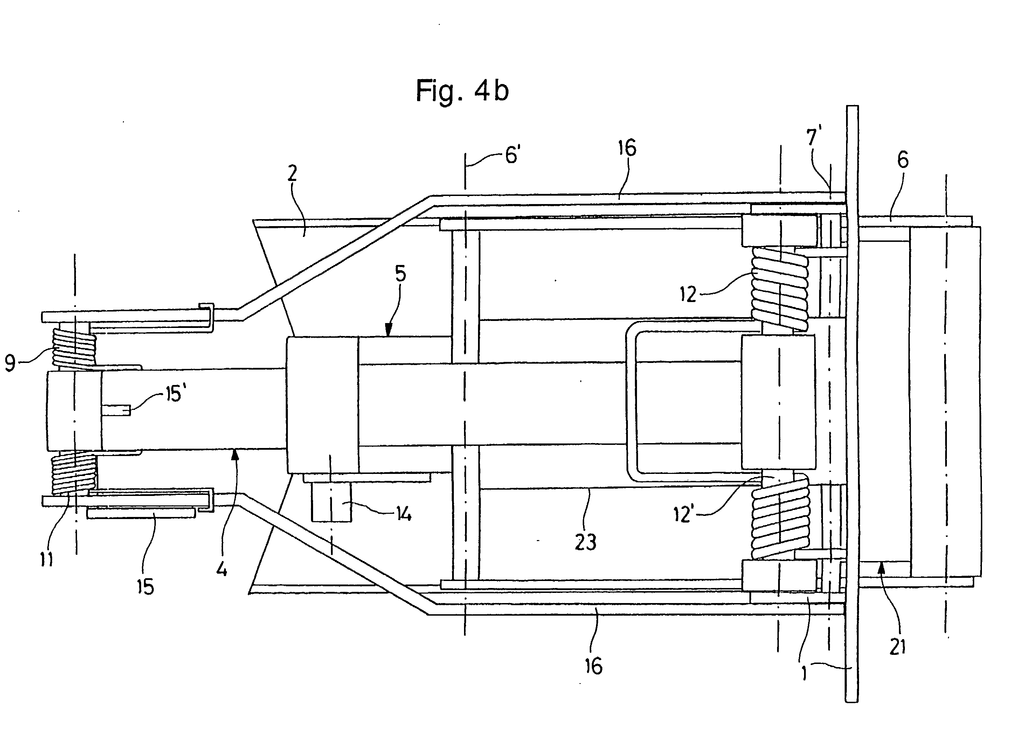

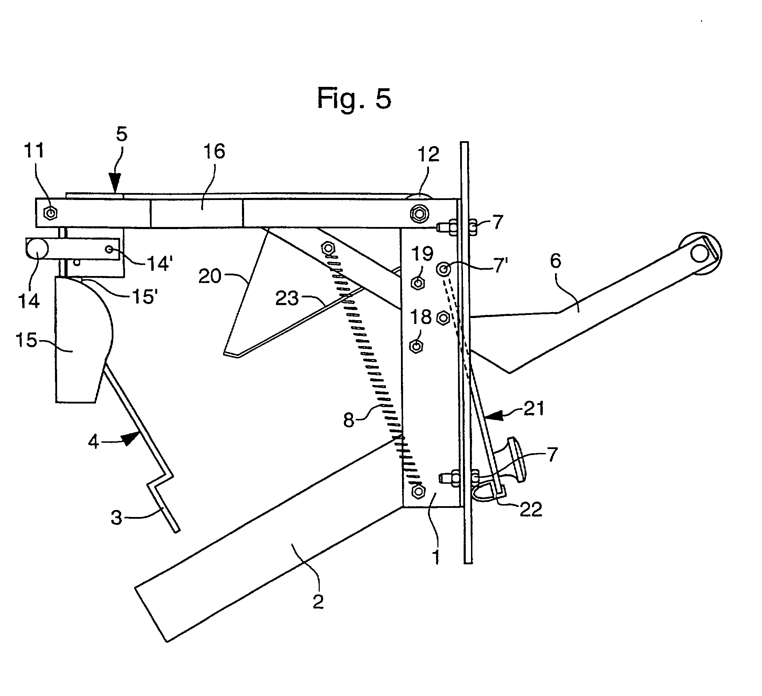

Aux figures 4a, 4b et 5, une deuxième forme d'exécution du dispositif pour casser les bouteilles est représentée. Ce dispositif est destiné à être monté sur une ouverture d'un container de récupération du verre, ladite ouverture se trouvant sur une paroi du container, ledit dispositif étant dans une position inclinée de 125°. Ce dispositif est utilisé pour les gros containers ou les bennes de camions qui ont des ouvertures sur les côtés. Les mêmes éléments de ces figures 4a, 4b et 5 portent des signes de référence identiques à ceux des figures 1 et 2, et ne seront pas expliqués en détail dans cette deuxième forme d'exécution étant donné que le principe d'armement du marteau 5 par le levier 6 et l'organe de blocage 4 du marteau sont par principe identiques au dispositif de la première forme d'exécution. Le levier 6 repose sur une butée 18 et peut être actionné jusqu'à ce qu'il vienne en contact avec une deuxième butée 19 où le marteau est dans une position armée.

Néanmoins en figure 4b, on peut observer en vue de dessus l'emplacement du ressort de rappel 9 de l'organe de blocage 4 autour de l'axe de rotation 11, ainsi que l'emplacement du ressort puissant 12 du marteau 5 autour de l'axe de rotation 12'. Dans cette figure, le ressort du levier, les butées et les vis n'ont pas été représentés pour ne pas surcharger la figure.

La porte 21 passant entre deux branches du levier 6 est articulée dans cette deuxième forme d'exécution selon un axe de rotation 7' placé entre deux faces intérieures du cadre 1. Un renfort sur la porte non visible sur les figures est prévu afin que la bouteille reste en contact du guide lors de sa poussée par ladite porte en direction de la butée 3. Cette même butée à l'extrémité de l'organe de blocage 4 a une forme de L inversé pour également empêcher la bouteille de se soulever lors de la poussée de la bouteille.

Dans cette deuxième forme d'exécution, la lame ressort 23 n'a pas exclusivement pour but d'appuyer fortement la bouteille contre le guide étant donné que le guide ne se trouve plus en position verticale comme pour la première forme d'exécution et que la bouteille s'appuie contre ledit guide par son propre poids. Cette lame ressort sert en outre à protéger la main d'un utilisateur si, par mégarde, il l'introduit à l'intérieur du dispositif et libère le marteau de sa position de blocage.

Un câble souple 20 est fixé d'une part à la lame ressort 23 et d'autre part sur un point 6' du levier venant en contact du marteau 5. Dès que le levier 6 est à nouveau actionné pour réarmer le marteau, le câble flexible 20 se tend et ainsi entraîne la lame ressort 23 dans son trajet ce qui permet de libérer un éventuel goulot d'une précédente bouteille cassée bloquée entre la lame et le guide 2. En position de repos du levier 6, la lame ressort 23 revient dans sa position initiale et le câble flexible 20 est détendu afin de ne pas fatiguer inutilement la lame ressort dans cette position.

Dans une variante de réalisation, le câble 20 peut être retiré entre la lame ressort et le levier du fait que dans cette deuxième forme d'exécution la lame appuie moins fortement la bouteille contre son guide ce qui peut éviter de coincer un éventuel goulot de bouteille cassée.

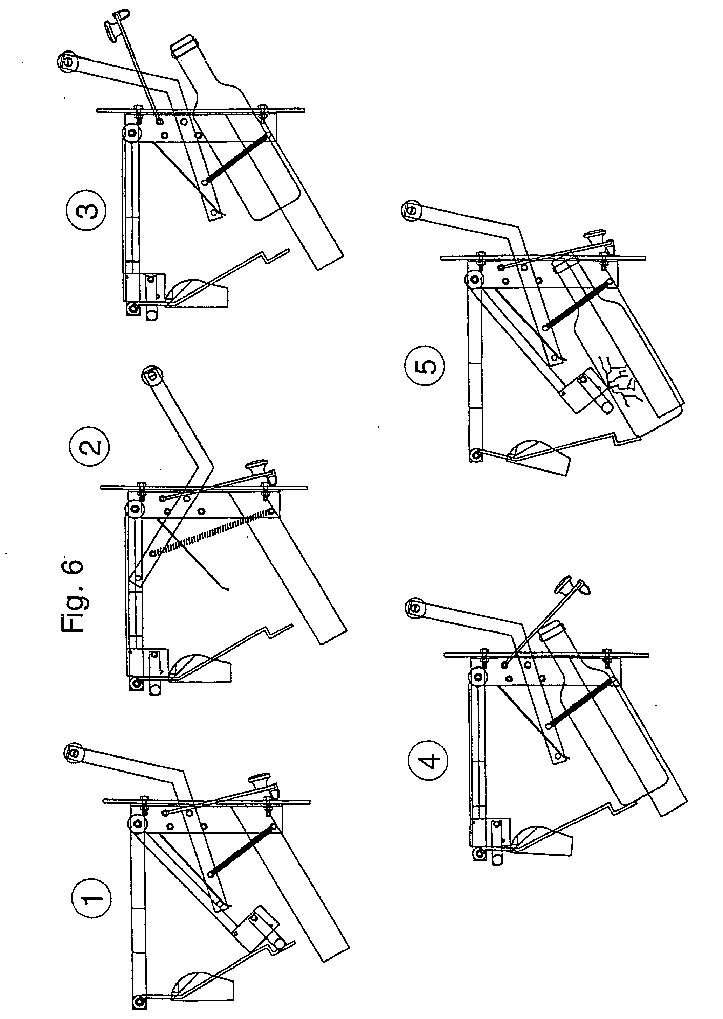

La figure 6 représente une cinématique des différentes étapes qui permettent de casser les bouteilles avec le dispositif de la deuxième forme d'exécution. Toutefois, il est à noter que le câble reliant la lame ressort au point 6' du levier a été retiré, et que ladite lame ressort est écartée du guide. Dans la première position, le marteau est désarmé. Dans la deuxième position, le levier est actionné pour pouvoir armer le marteau et le garder dans cette position armée grâce à l'organe de blocage. Dans la troisième position, le levier est relâché et revient automatiquement dans sa position de repos grâce à son ressort de rappel, tandis qu'une bouteille est introduite par l'ouverture du container et glisse le long du guide. Dans la quatrième position, la bouteille arrive contre une butée de la bascule la faisant pivoter autour de son axe de rotation pour libérer le marteau. Dans la cinquième position, le marteau ainsi libéré vient frapper la bouteille afin de la briser.

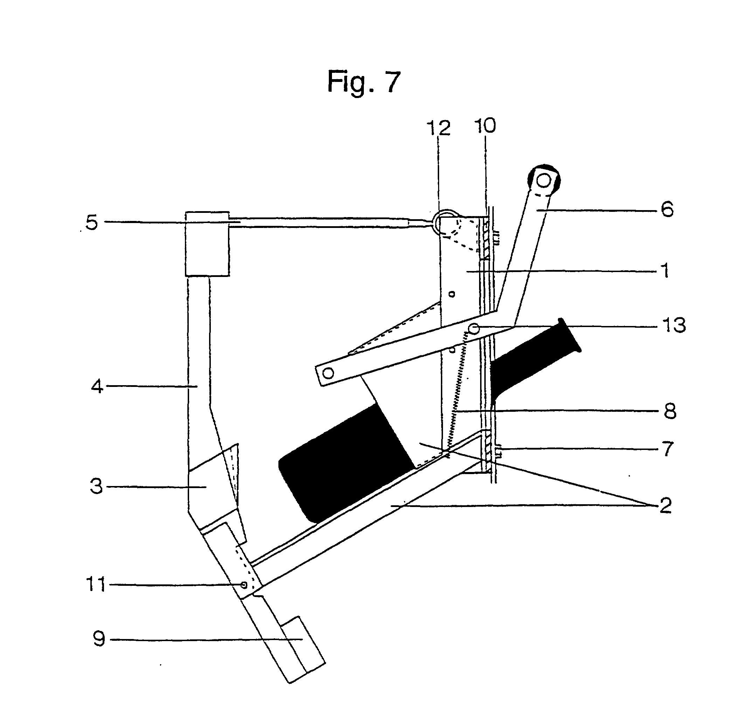

La figure 7 représente une troisième forme d'exécution du dispositif pour casser les bouteilles. Ce dispositif est destiné à être monté sur une ouverture d'un container de récupération du verre, ladite ouverture se trouvant sur une paroi verticale du container, ledit dispositif étant dans une position inclinée de 125°. Ce dispositif est utilisé comme pour la deuxième forme d'exécution pour les gros containers ou les bennes de camions qui ont des ouvertures sur les côtés. Les mêmes éléments des cette figure 7 portent des signes de référence identiques à ceux des figures 1 et 2.

La bouteille à casser est introduite par une ouverture du container et est réceptionnée par un guide 2 fixé au cadre 1 pour qu'elle glisse vers le bas. Ce guide comprend une partie tubulaire sur le haut montée sur une partie rectiligne de section transversale en forme de V. La partie tubulaire assure une certaine protection si un utilisateur introduit sa main dans le dispositif et déclenche le marteau 5.

L'organe de blocage constitue la grande différence par rapport aux deux autres formes d'exécution mentionnées ci-dessus. Cet organe est une bascule 4 ayant un contrepoids 9 servant comme moyens de rappel de la bascule dans une position de blocage du marteau. Cette bascule est articulée en un point 11 à l'extrémité libre du guide 2 et vient en butée contre ledit guide dans la position de blocage.

Une butée 3 de la bascule a une face inclinée de réception du fond de la bouteille pour lui permettre d'être plaquée contre le guide afin d'assurer que le marteau puisse la casser. L'extrémité opposée au contrepoids de la bascule sert de frein au marteau le gardant en position armée.

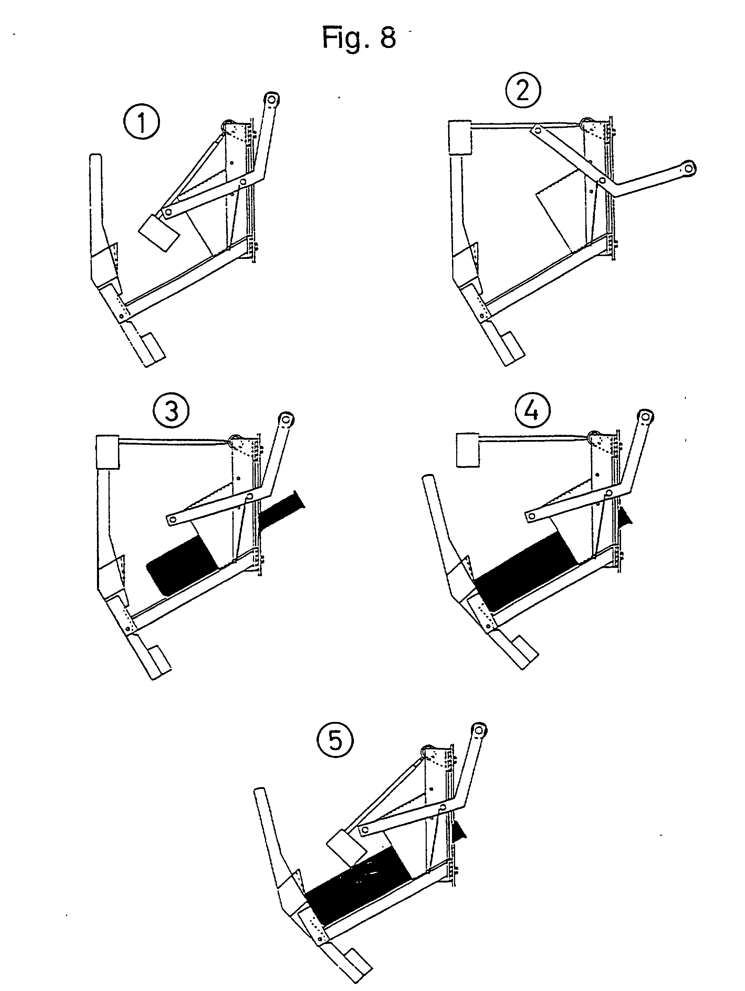

La figure 8 représente une cinématique des différentes étapes qui permettent de casser les bouteilles avec le dispositif de la troisième forme d'exécution. Dans la première position, le marteau est désarmé. Dans la deuxième position, le levier est actionné pour pouvoir armer le marteau et le garder dans cette position armée grâce à la bascule de blocage. Dans la troisième position, le levier est relâché et revient automatiquement dans sa position de repos grâce à son ressort de rappel, tandis qu'une bouteille est introduite par l'ouverture du container et glisse le long du guide. Dans la quatrième position, la bouteille arrive contre une butée de la bascule la faisant pivoter autour de son axe de rotation pour libérer le marteau. Dans la cinquième position, le marteau ainsi libéré vient frapper la bouteille afin de la briser.

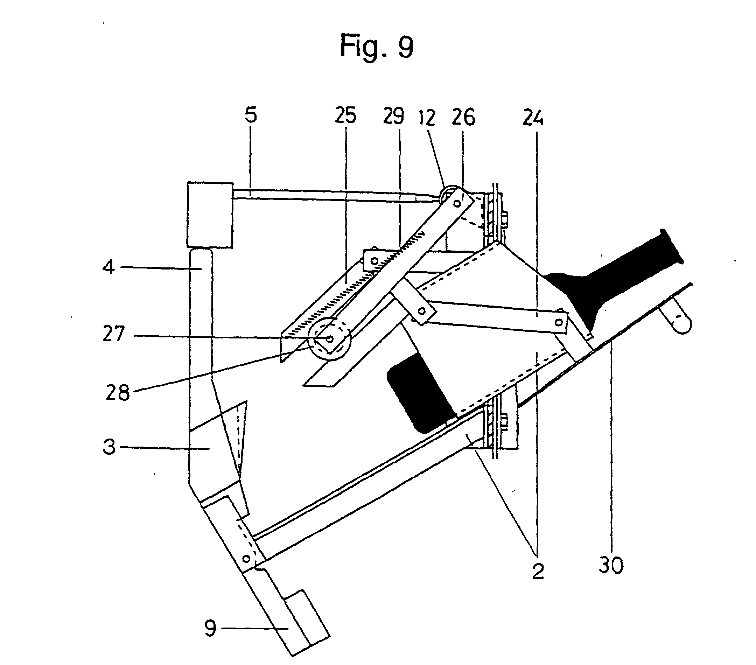

La figure 9 représente une quatrième forme d'exécution du dispositif en tant que variante de la troisième forme d'exécution de la figure 7. Dans cette quatrième forme d'exécution, le mécanisme de réarmement utilisé pour réarmer le marteau est remplacé par une porte 30 dont l'axe de rotation est placé sur un côté extérieur du cadre au niveau du départ du guide 2. Une partie du guide 2 de forme tubulaire se déplace en ouvrant la porte 30 permettant le guidage de la bouteille.

Les fonctions sont identiques aux autres formes d'exécution, soit appui du fond de la bouteille sur la butée 3 qui déclenche le frein 4 permettant au marteau 5 de casser la bouteille et aux débris de verre de tomber au fond du container. En refermant la porte 30, les bras de levier 24, 25 et 26 sont actionnés faisant ainsi monter l'axe 27, lui-même entraîné par deux poulies 28, qui coulissent dans le levier 25. Le marteau 5 ainsi réarmé est maintenu en place par le frein 4 qui a repris sa position initiale grâce au contrepoids 9. La porte 30 reste fermée grâce au ressort 29.

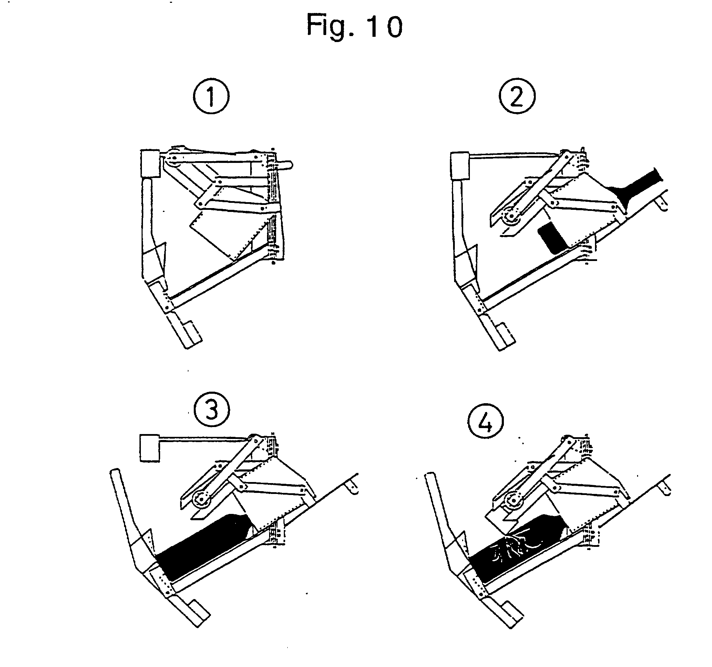

La figure 10 représente une cinématique des différentes étapes qui permettent de casser les bouteilles avec le dispositif de la quatrième forme d'exécution. Dans la première position, le marteau est désarmé. Dans la deuxième position, le levier est actionné pour pouvoir armer le marteau et le garder dans cette position armée grâce à la bascule de blocage. Dans la troisième position, le levier est relâché et revient automatiquement dans sa position de repos grâce à son ressort de rappel, tandis qu'une bouteille est introduite par l'ouverture du container et glisse le long du guide. Dans la quatrième position, la bouteille arrive contre une butée de la bascule la faisant pivoter autour de son axe de rotation pour libérer le marteau, qui, ainsi libéré, vient frapper la bouteille afin de la briser.

De multiples formes d'exécution du dispositif à casser les bouteilles en verre autres que celles explicitées ci-devant peuvent être imaginées à la portée de l'homme du métier sans sortir du cadre de l'invention. Par exemple, le mécanisme de réarmement du marteau peut comprendre un élément motorisé actionné par des moyens de commande électrique ou hydraulique ou pneumatique.

## Revendications

1. Dispositif pour casser des bouteilles en verre destiné à être monté sur un container de récupération du verre en coopération avec une ouverture de réception des bouteilles placée sur le dessus ou sur une paroi verticale ou sur une face inclinée dudit container, le dispositif comprenant un cadre (1) pour la fixation du dispositif au container, des moyens de guidage (2) montés sur le cadre pour la réception et le guidage de la bouteille, un marteau (5) monté rotatif sur le cadre et poussé en direction du guide par un ressort (12), un organe de blocage (4) du marteau dans une position d'armement du ressort, ledit organe comprenant une butée (3) sur laquelle une bouteille à casser peut prendre appui pour libérer le marteau de sa position armée, et un mécanisme de réarmement (6, 20) du marteau, **caractérisé en ce que** l'organe est agencé de manière à pouvoir pivoter à l'encontre de moyens de rappel (9) pour libérer le marteau de sa position armée lorsque la bouteille à casser prend appui contre la butée, et **en ce que** l'organe revient automatiquement en position de blocage du marteau grâce à ses moyens de rappel (9) quand le mécanisme de réarmement est activé pour placer le marteau dans sa position armée.

2. Dispositif selon la revendication 1, **caractérisé en ce que** l'organe de blocage est une bascule (4), et **en ce que** les moyens de rappel (9) sont constitués par un contrepoids de la bascule pour la ramener dans une position d'armement du marteau quand le mécanisme de réarmement est activé, l'articulation de la bascule se trouvant à l'extrémité libre des moyens de guidage (2).

3. Dispositif selon la revendication 1, **caractérisé en ce que** les moyens de rappel (9) sont constitués par un ressort de rappel disposé sur un axe de rotation (11) de l'organe de blocage (4).

4. Dispositif selon la revendication 3, **caractérisé en ce que** le ressort de rappel (9) et l'axe de rotation (11) de l'organe de blocage sont disposés à l'extrémité libre de bras, dont l'autre extrémité est fixée sur le cadre du côté opposé aux moyens de guidage (2), l'extrémité des bras fixée audit cadre se trouvant sur l'axe de rotation (12') du marteau (5).

5. Dispositif selon l'une des revendications 1 à 4, **caractérisé en ce que** le mécanisme de réarmement est un levier (6) monté rotatif sur le cadre du dispositif dont une extrémité sert à pousser le marteau à l'encontre de son ressort (12) jusqu'à sa position armée et l'autre extrémité peut être activée manuellement.

6. Dispositif selon l'une des revendications 1 à 4, **caractérisé en ce que** le mécanisme de réarmement est constitué par une porte à pivotement (30) sur le cadre au niveau de l'ouverture de réception d'une bouteille et par des bras articulés (24, 25, 26) dont une partie vient pousser le marteau dans sa position d'armement lorsque la porte est fermée.

7. Dispositif selon l'une des revendications 5 et 6, **caractérisé en ce que** le levier ou la porte sont ramenés dans une position de repos par un autre ressort de rappel (8, 29).

8. Dispositif selon l'une des revendications précédentes, **caractérisé en ce que** la face de la butée (3) en contact avec une bouteille est inclinée de façon à permettre à la bouteille de s'appuyer contre le guide sur un côté opposé au marteau et de faciliter le pivotement de l'organe de blocage (4).

9. Dispositif selon l'une des revendications précédentes, **caractérisé en ce que** l'extrémité du marteau venant en contact avec une bouteille a une forme de pointe, et **en ce que** la pointe est en un matériau plus dur que le verre, de préférence en diamant.

10. Dispositif selon la revendication 1, **caractérisé en ce que** le ressort est monté en forme de spirale autour de l'axe de rotation du marteau et **en ce que** l'axe de rotation (12') du marteau est parallèle à l'axe de rotation (11) de l'organe de blocage (4).

11. Dispositif selon la revendication 1, **caractérisé en ce que** les moyens de guidage (2) sont constitués par un guide tubulaire ou par un guide rectiligne de section transversale en forme de V, et **en ce qu'**une lame ressort (23) fixée au cadre sur un côté opposé au guide est destinée à pousser la bouteille à casser contre le guide.

12. Dispositif selon la revendication 11, **caractérisé en ce qu'**un câble flexible (20) est fixé d'une part à la lame ressort (23) et d'autre part à l'extrémité du mécanisme de réarmement (6) venant en contact avec le marteau (5), dans une position de repos du mécanisme le câble étant détendu, alors qu'en position d'armement du marteau il tire la lame ressort dans une direction opposée aux moyens de guidage (2).

13. Dispositif selon la revendication 1, **caractérisé en ce qu'**une porte (21) montée à pivotement sur une partie extérieure du cadre (1) ferme l'ouverture du container et permet de pousser la bouteille introduite par l'ouverture en direction de la butée (3) de l'organe de blocage (4).

## Claims

1. Device for crushing glass bottles intended to be mounted on a glass recovery container in cooperation with a bottle receiving opening placed on the top portion or a vertical wall or an inclined face of said container, said device including a frame (1) for fixing said device to the container, guiding means (2) mounted on the frame for receiving and guiding a bottle, a hammer (5) rotatably mounted on said frame and pushed in the direction of the guiding means by spring (12), a locking member (4) for locking the hammer in a position wherein the spring is loaded, said member including a stop member (3) onto which a bottle to be crushed can abut to release the hammer from its loaded position, and a hammer loading mechanism (6, 20), **characterised in that** said locking member is arranged so as to pivot against retum means (9) to release the hammer from its loaded position when the bottle to be crushed abuts against the stop member, and **in that** said locking member returns automatically in the hammer locking position owing to its return means (9) when the loading mechanism is actuated to place the hammer in the loaded position.

2. Device according to claim 1, **characterised in that** the locking member is a rocker (4) and **in that** the return means (9) are formed of a counterweight of the rocker to bring it in a hammer loaded position when the loading mechanism is actuated, the articulation of the rocker being arranged at the free end of the guiding means (2).

3. Device according to claim 1, **characterised in that** the retum means (9) are formed of a return spring arranged on a rotation axle (11) of the locking member (4).

4. Device according to claim 3, **characterised in that** the locking member return spring (9) and rotation axle (11) are arranged at the free ends of arms whose other ends are fixed to the frame on the side opposite to the guiding means (2), the ends of the arms fixed to the frame being on the rotation axle (12') of the hammer (5).

5. Device according to any of claims 1 to 4, **characterised in that** the loading mechanism is a lever (6) rotatably mounted on the frame of the device, one end of which being used to push the hammer against its spring (12) until it reaches its loaded position, the other end of which being able to be manually actuated.

6. Device according to any of claims 1 to 4, **characterised in that** the loading mechanism is formed of a door (30) pivoting on the frame at the bottle receiving opening and articulated arms (24, 25, 26) a portion of which pushes the hammer in its loaded position when the door is closed.

7. Device according to any of claims 5 and 6, **characterised in that** the lever or the door are returned in a rest position by another return spring (8,29).

8. Device according to any of the preceding claims, **characterised in that** the face of the stop member (3) in contact with a bottle is inclined so as to allow the bottle to abut against the guiding means on a side opposite to the hammer and facilitate the pivoting of the locking member (4).

9. Device according to any of the preceding claims, **characterised in that** the end of the hammer which comes into contact with a bottle has a pointed tip shape, and **in that** the pointed tip is made of a material harder than glass, preferably diamond.

10. Device according to claim 1, **characterised in that** the spring is spirally mounted around the rotation axle of the hammer and **in that** the hammer rotation axle (12') is parallel to the locking member (4) rotation axle (11).

11. Device according to claim 1, **characterised in that** the guiding means (2) is formed of a tubular guiding member or rectilinear guiding member having a V shaped cross-section, and **in that** a spring leaf (23) fixed to the frame on a side opposite to the guiding member is intended to push the bottle to be crushed against the guiding member.

12. Device according to claim 11, **characterised in that** a flexible cable (20) is fixed on the one hand to the spring leaf (23) and on the other hand to the end of the loading mechanism (6) coming into contact with the hammer (5), in a rest position of the mechanism, the cable being slack, whereas it pulls the spring leaf in a direction opposite to the guiding means in the hammer setting position.

13. Device according to claim 1, **characterised in that** a door (24) mounted so as to pivot on an external part of the frame (1) closes the container opening and allows the bottle introduced through the opening to be pushed towards the stop member (3) of the locking member (4).

## Patentansprüche

1. Vorrichtung zum Zerkleinern von Glasflaschen, die dazu bestimmt ist, an einem Glassammelbehälter angebracht zu werden und mit einer Öffnung für die Aufnahme von Flaschen, die an der Oberseite oder an einer vertikalen Wand oder an einer geneigten Fläche des Behälters angeordnet ist, zusammenzuwirken, wobei die Vorrichtung einen Rahmen (1) für die Befestigung der Vorrichtung an dem Behälter, Führungsmittel (2), die am Rahmen angebracht sind, um die Flasche aufzunehmen und zu führen, einen Hammer (5), der drehbar am Rahmen angebracht ist und in Richtung der Führung durch eine Feder (12) angetrieben wird, eine Sperre (4) für den Hammer in einer gespannten Stellung der Feder, wobei die Sperre einen Anschlag (3) aufweist, an dem sich eine zu zerkleinernde Flasche abstützen kann, um den Hammer aus seiner gespannten Stellung freizugeben, und einen Mechanismus (6, 20) für die erneute Spannung des Hammers umfaßt, **dadurch gekennzeichnet, daß** die Sperre so beschaffen ist, daß sie gegen Rückstellmittel (9) schwenkbar ist, um den Hammer aus seiner gespannten Stellung freizugeben, wenn sich die zu zerkleinernde Flasche am Anschlag abstützt, und daß die Sperre kraft ihrer Rückstellmittel (9) automatisch wieder ihre Stellung zum Sperren des Hammers einnimmt, wenn der Mechanismus zum erneuten Spannen aktiviert wird, um den Hammer in seine gespannten Stellung zu bringen.

2. Vorrichtung nach Anspruch 1, **dadurch gekennzeichnet, daß** die Sperre eine Kippvorrichtung (4) ist und daß die Rückstellmittel (9) aus einem Gegengewicht der Kippvorrichtung gebildet sind, um sie in eine Position zum Spannen des Hammers zurückzuführen, wenn der Mechanismus zum erneuten Spannen aktiviert wird, wobei sich die Anlenkung der Kippvorrichtung am freien Ende der Führungsmittel (2) befindet.

3. Vorrichtung nach Anspruch 1, **dadurch gekennzeichnet, daß** die Rückstellmittel (9) durch eine Rückstellfeder gebildet sind, die an einer Drehachse (11) der Sperre (4) angeordnet ist.

4. Vorrichtung nach Anspruch 3, **dadurch gekennzeichnet, daß** die Rückstellfeder (9) und die Drehachse (11) der Sperre am freien Ende des Arms angeordnet sind, dessen anderes Ende am Rahmen auf der dem Führungsmittel (2) gegenüberliegenden Seite befestigt ist, wobei das am Rahmen befestigte Ende der Arme sich auf der Drehachse (12') des Hammers (5) befindet.

5. Vorrichtung nach einem der Ansprüche 1 bis 4, **dadurch gekennzeichnet, daß** der Mechanismus zum erneuten Spannen ein Hebel (6) ist, der am Rahmen der Vorrichtung drehbar angebracht ist und wovon ein Ende dazu dient, den Hammer gegen seine Feder (12) bis in seine gespannte Stellung zu schieben, während das andere Ende manuell aktiviert werden kann.

6. Vorrichtung nach einem der Ansprüche 1 bis 4, **dadurch gekennzeichnet, daß** der Mechanismus zum erneuten Spannen durch eine Schwenktür (30) am Rahmen auf Höhe der Öffnung für die Aufnahme einer Flasche und durch angelenkte Arme (24, 25, 26) gebildet ist, wovon ein Teil den Hammer in seine gespannte Stellung schiebt, wenn die Tür geschlossen ist.

7. Vorrichtung nach einem der Ansprüche 5 und 6, **dadurch gekennzeichnet, daß** der Hebel oder die Tür durch eine weitere Rückstellfeder (8, 29) in eine Ruheposition zurückgeführt werden.

8. Vorrichtung nach einem der vorhergehenden Ansprüche, **dadurch gekennzeichnet, daß** die Fläche des Anschlags (3), die mit einer Flasche in Kontakt ist, so geneigt ist, daß sich die Flasche an der Führung auf einer dem Hammer gegenüberliegenden Seite abstützen kann und daß die Schwenkung der Sperre (4) erleichtert wird.

9. Vorrichtung nach einem der vorhergehenden Ansprüche, **dadurch gekennzeichnet, daß** das Ende des Hammers, das mit einer Flasche in Kontakt gelangt, die Form einer Spitze hat und daß die Spitze aus einem Werkstoff besteht, der härter als Glas ist, vorzugsweise aus Diamant.

10. Vorrichtung nach Anspruch 1, **dadurch gekennzeichnet, daß** die Feder spiralförmig um die Drehachse des Hammers angebracht ist und daß die Drehachse (12') des Hammers zu der Drehachse (11) der Sperre (4) parallel ist.

11. Vorrichtung nach Anspruch 1, **dadurch gekennzeichnet, daß** die Führungsmittel (2) durch eine rohrförmige Führung oder durch eine geradlinige Führung mit V-förmigem transversalen Querschnitt gebildet sind und daß ein am Rahmen auf einer der Führung gegenüberliegenden Seite befestigtes Federblatt (23) dazu bestimmt ist, die zu zerkleinernde Flasche gegen die Führung zu drükken.

12. Vorrichtung nach Anspruch 11, **dadurch gekennzeichnet, daß** ein flexibles Seil (20) einerseits an dem Federblatt (23) und andererseits an dem Ende des Mechanismus (6) zum erneuten Spannen, das mit dem Hammer (5) in Kontakt gelangt, befestigt ist, wobei das Seil in einer Ruheposition des Mechanismus entspannt ist, während es in einer gespannten Position des Hammers das Federblatt in einer zu den Führungsmitteln (2) entgegengesetzten Richtung zieht.

13. Vorrichtung nach Anspruch 1, **dadurch gekennzeichnet, daß** eine Tür (21), die an einem äußeren Abschnitt des Rahmens (1) schwenkbar angebracht ist, die Öffnung des Behälters verschließt und es ermöglicht, die durch die Öffnung eingeführte Flasche in Richtung auf dem Anschlag (3) der Sperre (4) zu drücken.
